(19) 

**Europäisches Patentamt**
**European Patent Office**
**Office européen des brevets**

(11) **EP 4 410 849 A1**

(12) **EUROPEAN PATENT APPLICATION**
published in accordance with Art. 153(4) EPC

(43) Date of publication:
**07.08.2024 Bulletin 2024/32**

(21) Application number: **22876188.8**

(22) Date of filing: **27.09.2022**

(51) International Patent Classification (IPC):
**C08F 212/08** (2006.01)  **B41M 1/08** (2006.01)
**B41M 1/30** (2006.01)  **C08F 2/46** (2006.01)
**C08F 20/00** (2006.01)  **C08F 220/10** (2006.01)
**C09D 11/101** (2014.01)

(52) Cooperative Patent Classification (CPC):
**B41M 1/08; B41M 1/30; C08F 2/46; C08F 20/00;
C08F 212/08; C08F 220/10; C09D 11/101**

(86) International application number:
**PCT/JP2022/035853**

(87) International publication number:
**WO 2023/054322 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021160480**
**04.02.2022 JP 2022016075**
**29.03.2022 JP 2022053111**

(71) Applicant: **Toray Industries, Inc.**
**Tokyo 103-8666 (JP)**

(72) Inventors:
• **ITO, Akito**
**Otsu-shi, Shiga 520-8558 (JP)**
• **KOSHIMIZU, Noboru**
**Otsu-shi, Shiga 520-8558 (JP)**
• **KOBAYASHI, Shiro**
**Otsu-shi, Shiga 520-8558 (JP)**
• **INOUE, Takejiro**
**Otsu-shi, Shiga 520-8558 (JP)**

(74) Representative: **Kador & Partner Part mbB**
**Corneliusstraße 15**
**80469 München (DE)**

(54) **RESIN, ACTIVE ENERGY RAY-CURABLE COMPOSITION, ACTIVE ENERGY RAY-CURABLE INK, OVERCOAT VARNISH, PAINT, ADHESIVE, PHOTORESIST, AND METHOD FOR PRODUCING PRINTED MATTER**

(57) An object of the present invention is to provide a resin that is superior in low tackiness and anti-scumming property at the time of printing and also superior in hot water treatment resistance after printing, an active energy ray-curable composition, an active energy ray-curable ink, an overcoat varnish, a paint, an adhesive, a photoresist, and a method for producing a printed matter. The present invention is a resin that is a copolymer of a monomer group including a styrene-based compound (a) and a vinyl monomer (c) having a hydrophilic group, wherein a content of the styrene-based compound (a) in the monomer group is 50.0 mol% or more and 85.0 mol% or less, and the resin has a glass transition temperature (Tg) of 100°C or more and 150°C or less.

EP 4 410 849 A1

**Description**

TECHNICAL FIELD

The present invention relates to a resin, an active energy ray-curable composition, an active energy ray-curable ink, an overcoat varnish, a paint, an adhesive, a photoresist, and a method for producing a printed matter.

BACKGROUND ART

The printed packaging matter market continues to grow with the global population increase, and there is an increasing need for a flexible packaging printing technology that uses a thin film as a substrate and is used for applications such as daily goods, foodstuffs, and pharmaceuticals.

In recent years, from the viewpoint of wide-variety small-lot manufacture and low VOC emission to reduce the use of volatile solvents, attempts have been started to carry out flexible packaging printing by a lithographic printing method. Lithographic printing is a printing method that has been widely used as a system for supplying printed matters at high speed, large amount, and low cost. In particular, in recent years, the use of active energy ray-curable printing using a mercury lamp, a metal halide lamp, a light emitting diode, an electron beam, or the like has spread due to a facility aspect, a safety aspect, an environmental aspect, and high productivity.

Active energy ray-curable lithographic printing inks generally have a viscosity as high as 100 times or more that of gravure inks commonly used for flexible packaging printing, and tend to have poor fluidity. In this respect, an active energy ray-curable offset printing ink superior in fluidity is disclosed (Patent Document 1).

In addition, an offset printing ink with a reduced amount of mist in order to cope with a process defect called misting is disclosed (Patent Document 2).

PRIOR ART DOCUMENT

PATENT DOCUMENTS

Patent Document 1: Japanese Patent Laid-open Publication No. 2018-83864
Patent Document 2: Japanese Patent Laid-open Publication No. 2009-263622

SUMMARY OF THE INVENTION

PROBLEMS TO BE SOLVED BY THE INVENTION

However, the ink according to Patent Document 1 is high in tack and tends to exhibit poor register accuracy at the time of printing.

In addition, since food packages are sterilized via a hot water treatment, printed matters are required to have hot water resistance, but the ink according to Patent Document 2 contains a resin that has a low glass transition temperature and tends to be insufficient in hot water resistance.

Accordingly, an object of the present invention is to overcome the problems of such conventional technologies, and provide an active energy ray-curable ink being low in tack, and superior in register accuracy and also superior in printing quality and hot water resistance of a printed matter, a method for producing a printed matter using the active energy ray-curable ink, and a resin.

SOLUTIONS TO THE PROBLEMS

The present inventors have paid attention to the fact that urethane (meth)acrylate is used for the ink according to Patent Document 1, and urethane (meth)acrylate has strong cohesive force, and have accomplished the present invention.

That is, the present invention provides a resin that is a copolymer of a monomer group including a styrene-based compound (a), a (meth)acrylic acid alkyl ester (b), and a vinyl monomer (c) having a hydrophilic group, in which a content of the styrene-based compound (a) in the monomer group is 50.0 mol% or more and 85.0 mol% or less, and the resin has a glass transition temperature Tg of 100°C or more and 150°C or less.

In addition, the present invention also provides an active energy ray-curable composition including: the resin of the present invention; and an ethylenically unsaturated compound (A).

The present invention also provides an active energy ray-curable ink including the active energy ray-curable composition of the present invention and a pigment.

In addition, the present invention provides an overcoat varnish, a paint, an adhesive, or a photoresist including the active energy ray-curable composition of the present invention.

In addition, the present invention provides a method for producing a printed matter, the method including a step of irradiating the active energy ray-curable composition of the present invention with an active energy ray after applying the active energy ray-curable composition to a substrate.

EFFECTS OF THE INVENTION

In accordance with the present invention, it is possible to provide an active energy ray-curable ink that is low in tack and superior in anti-scumming property at the time of printing and also superior in hot water treatment resistance after printing.

EMBODIMENTS OF THE INVENTION

Hereinafter, embodiments of the resin, the active energy ray-curable composition, the active energy ray-curable ink, the overcoat varnish, the paint, the adhesive, the photoresist, and the method for producing a printed matter according to the present invention will be described in detail. However, the present invention is not limited to the following embodiments, and may be implemented in a variety of ways depending on the purpose and application.

Note that in the present invention, "or more" means equal to or more than a numerical value indicated therein. In addition, "or less" means equal to or less than a numerical value indicated therein.

The "(meth)acrylic acid" is a generic term including acrylic acid and methacrylic acid.

[Resin]

The resin of the present invention is a copolymer of a monomer group including a styrene-based compound (a) and a vinyl monomer (c) having a hydrophilic group.

(Styrene-based compound (a))

Owing to that the monomer group that forms the copolymer contains the styrene-based compound (a), the resin of the present invention can provide an elasticity derived from an aromatic ring skeleton to an ink, and can afford an ink with low tack and can improve the register accuracy at the time of printing.

Examples of the styrene-based compound (a) include styrene, $\alpha$-methylstyrene, and a styrene compound having at least one alkyl group having 1 to 4 carbon atoms on an aromatic ring.

In the resin of the present invention, the content of the styrene-based compound (a) in the monomer group that forms the copolymer is 50.0 mol% or more and 85.0 mol% or less. When the content of the styrene-based compound (a) is 50.0 mol% or more, preferably 60.0 mol% or more, the elasticity of the ink is improved, the tack is suppressed, and the register accuracy at the time of printing can be improved. Furthermore, the stringiness of the active energy ray-curable composition can be suppressed, and the misting resistance can be improved. In addition, when the content of the styrene-based compound (a) is 85.0 mol% or less, preferably 75.0 mol% or less, and more preferably 70.0 mol% or less, the viscosity of the ink is sufficient, and the compatibility with a polyfunctional (meth)acrylate described later is also improved, so that the fluidity and the leveling of the ink are improved.

When the content of the styrene-based compound (a) in the monomer group is measured from an ink or a resin, after the resin is eluted from the ink using gel permeation chromatography (GPC), the amount of a structure corresponding to the styrene-based compound (a) is measured by NMR analysis, and this amount can be converted into the amount of the styrene-based compound (a).

((Meth)acrylic acid alkyl ester (b))

In the resin of the present invention, the monomer group that forms the copolymer preferably further includes a (meth)acrylic acid alkyl ester (b). Owing to the presence of the (meth)acrylic acid alkyl ester (b), the compatibility with the polyfunctional (meth)acrylate and the affinity to a flexible packaging film are improved, and the leveling of the ink can be improved.

Examples of the (meth)acrylic acid alkyl ester (b) include methyl (meth)acrylate, ethyl (meth)acrylate, propyl (meth)acrylate, butyl (meth)acrylate, 2-ethylhexyl (meth)acrylate, isononyl (meth)acrylate, and dodecyl (meth)acrylate, and these may be used singly or two or more thereof may be used in combination.

The number of carbon atoms in the alkyl group of the (meth)acrylic acid alkyl ester (b) is preferably 3 or more and 13 or less. When the number of carbon atoms in the alkyl group of the (meth)acrylic acid alkyl ester (b) is set to preferably 3 or more, and more preferably 5 or more, the compatibility with the polyfunctional (meth)acrylate and the affinity with a flexible packaging film are improved, and the leveling of the ink can be improved. In addition, when the number of carbon atoms in the alkyl group of the (meth)acrylic acid alkyl ester (b) is set to preferably 13 or less, and more preferably 10 or less, the affinity to a non-printing part at the time of waterless lithographic printing can be controlled, and the anti-scumming property can be improved.

In the resin of the present invention, the content of the (meth)acrylic acid alkyl ester (b) in the monomer group that forms the copolymer is preferably 0.1 mol% or more and 15.0 mol% or less. Owing to that the content of the (meth)acrylic acid alkyl ester (b) is 0.1 mol% or more, more preferably 0.5 mol% or more, and still more preferably 3.0 mol% or more, the compatibility with the polyfunctional (meth)acrylate and the affinity with a flexible packaging film are improved, and the leveling of the ink can be improved. In addition, owing to that the content of the (meth)acrylic acid alkyl ester (b) is 15.0 mol% or less, more preferably 10.0 mol% or less, and still more preferably 8.0 mol% or less, the affinity to a non-printing part at the time of waterless lithographic printing can be controlled, and the anti-scumming property can be improved.

When the content of the (meth)acrylic acid alkyl ester (b) in the monomer group is measured from an ink or a resin, after the resin is eluted from the ink using gel permeation chromatography (GPC), the amount of a structure corresponding to the (meth)acrylic acid alkyl ester (b) is measured by NMR analysis, and this amount can be converted into the amount of the (meth)acrylic acid alkyl ester (b).

(Vinyl monomer (c) having hydrophilic group)

Owing to that the monomer group that forms the copolymer contains the vinyl monomer (c) having a hydrophilic group, the resin of the present invention is superior in the dispersibility of the pigment in the ink of the present invention. In addition, the ink of the present invention can be effectively brought close to a Newtonian fluid as described later.

Examples of the hydrophilic group of the vinyl monomer (c) having a hydrophilic group include a hydroxy group, an amino group, a mercapto group, a carboxy group, a sulfo group, and a phosphate group. Among them, a carboxy group and a hydroxy group, which have good dispersibility of a pigment, are more preferable, and it is particularly preferable that at least one of a carboxyl group and a hydroxyl group is contained.

Specific examples of the vinyl monomer (c) having a hydrophilic group include monomers having a carboxy group such as (meth)acrylic acid, itaconic acid, crotonic acid, maleic acid, and fumaric acid, monomers having a hydroxy group such as 2-hydroxyethyl (meth)acrylate, monomers having an amino group such as dimethylaminoethyl (meth)acrylate, monomers having a mercapto group such as 2-(mercaptoacetoxy)ethyl (meth)acrylate, monomers having a sulfo group such as (meth)acrylamide-t-butyl sulfonic acid, and monomers having a phosphate group such as 2-(meth)acryloxyethyl acid phosphate.

The acid value of the resin of the present invention is preferably 30 mg KOH/g or more and 250 mg KOH/g or less. When the acid value is set to 30 mg KOH/g or more, more preferably 60 mg KOH/g or more, and still more preferably 75 mg KOH/g or more, the pigment dispersibility of the ink of the present invention is improved, and the anti-scumming property is improved. When the acid value is set to 250 mg KOH/g or less, more preferably 230 mg KOH/g or less, and still more preferably 210 mg KOH/g or less, good solubility in the polyfunctional (meth)acrylate described later is exhibited, and the fluidity of the ink is maintained by suppressing an increase in viscosity due to polar groups.

The acid value of the resin can be determined in accordance with "3.1 neutralization titration" in the test method of JIS K 0070: 1992.

The resin of the present invention preferably has an ethylenically unsaturated group. The ethylenically unsaturated group forms a crosslinked structure via a reaction with a radical species, and can improve the sensitivity of the ink in the ink set of the present invention to active energy rays.

The iodine value of the resin of the present invention is preferably 0.5 mol/kg or more and 3.0 mol/kg or less. When the iodine value is set to 0.5 mol/kg or more, more preferably 1.0 mol/kg or more, and still more preferably 1.5 mol/kg or more, the curing sensitivity of the ink to active energy rays is improved. When the iodine value is set to 3.0 mol/kg or less, more preferably 2.5 mol/kg or less, and still more preferably 2.0 mol/kg or less, the storage stability of the ink is improved.

The iodine value of the resin can be adjusted by the amount of ethylenically unsaturated groups. The iodine value of the resin can be determined in accordance with the method described in Section 6 of JIS K 0070: 1992.

The resin of the present invention that has an ethylenically unsaturated group can be prepared by the following method.

First, a monomer (c) having a hydrophilic group is polymerized or copolymerized using a radical polymerization initiator to afford a resin having a hydrophilic group.

Then, an ethylenically unsaturated compound having a reactive functional group is subjected to an addition reaction with the hydrophilic group to afford a resin having an ethylenically unsaturated group and a hydrophilic group.

Examples of the ethylenically unsaturated compound having a reactive functional group include an ethylenically unsaturated compound having a glycidyl group, an ethylenically unsaturated compound having an isocyanate group, acryloyl chloride, methacryloyl chloride, and allyl chloride.

Examples of the ethylenically unsaturated compound having a glycidyl group include glycidyl (meth)acrylate, allyl glycidyl ether, glycidyl crotonate, and glycidyl isocrotonate.

In addition, examples of the ethylenically unsaturated compound having an isocyanate group include (meth)acryloyl isocyanate and (meth)acryloylethyl isocyanate.

Examples of the resin of the present invention include styrene-(meth)acrylic acid copolymer, styrene-(meth)acrylic acid-(meth)acrylate copolymer, styrene-maleic acid copolymer, styrene-maleic acid-(meth)acrylic acid copolymer, and styrene-maleic acid-(meth)acrylate copolymer. These are preferable in terms of availability of monomers, low cost, ease of synthesis, compatibility with other components of an ink, dispersibility of a pigment, and so on.

The weight average molecular weight of the resin of the present invention is preferably 5,000 or more and 100,000 or less. When the weight average molecular weight is set to 5,000 or more, more preferably 15,000 or more, and still more preferably 20,000 or more, the anti-scumming property is improved. When the weight average molecular weight is set to 100,000 or less, more preferably 75,000 or less, and still more preferably 50,000 or less, the fluidity of the ink can be maintained.

The weight average molecular weight of the resin can be determined by a measurement using gel permeation chromatography (GPC) and conducting the calculation in terms of polystyrene.

The resin of the present invention preferably has a dispersity (PDI) defined by weight average molecular weight/number average molecular weight of 1.5 or more and 10.0 or less. When the polydispersity is set to 10.0 or less, more preferably 8.0 or less, and still more preferably 7.0 or less, the elasticity of the ink of the present invention can be improved, and the tack can be reduced. When the polydispersity is set to 1.5 or more, more preferably 2.0 or more, and still more preferably 3.0 or more, good compatibility with the polyfunctional (meth)acrylate is obtained.

The glass transition temperature Tg of the resin of the present invention is 100°C or more and 150°C or less. When the Tg is set to 150°C or less, preferably 140°C or less, and more preferably 130°C or less, the fluidity of the ink and the leveling of the ink can be improved. In addition, when the Tg is set to 100°C or more, and preferably 110°C or more, the elasticity of the ink increases, and the tack decreases, so that the register accuracy at the time of printing can be improved. Furthermore, the hot water resistance of a coating film containing the resin can be improved.

The glass transition temperature Tg of the resin can be determined in accordance with JIS K 7121: 2012 using a differential scanning calorimeter (DSC).

The resin of the present invention preferably has a loss tangent $\tan \delta_r$ of 0.5 or more and 10.0 or less as measured with a parallel plate vibration rheometer of JIS K 7244-10: 2005 at 160°C, an angular velocity of 10 rad/s, and a strain of 10%. When the $\tan \delta_r$ is set to 0.5 or more, more preferably 1.0 or more, and still more preferably 1.5 or more, the fluidity of the ink and the leveling of the ink can be improved. In addition, when the $\tan \delta_r$ is set to 10.0 or less, more preferably 5.0 or less, still more preferably 4.0 or less, and further preferably 3.0 or less, the elasticity of the ink increases, and the tack decreases, so that the register accuracy at the time of printing can be improved.

The resin of the present invention preferably has a loss tangent $\tan \delta_{r2}$ of 1.0 or more and 50.0 or less as measured with a parallel plate vibration rheometer of JIS K 7244-10: 2005 at 180°C, an angular velocity of 10 rad/s, and a strain of 10%. When the $\tan \delta_{r2}$ is set to 1.0 or more, more preferably 2.0 or more, and still more preferably 3.0 or more, the fluidity of the ink and the leveling of the ink can be improved. In addition, when the $\tan \delta_{r2}$ is set to 50.0 or less, more preferably 20.0 or less, and still more preferably 10.0 or less, the elasticity of the ink increases, and the tack decreases, so that the register accuracy at the time of printing can be improved.

For example, the loss tangent $\tan \delta_r$ can be controlled within a preferable range by controlling the weight average molecular weight, the acid value, the Tg, and so on of the resin within the above-mentioned preferable ranges.

[Active energy ray-curable composition]

The active energy ray-curable composition of the present invention includes the resin of the present invention and an ethylenically unsaturated compound (A). Since the resin of the present invention has good compatibility with the ethylenically unsaturated compound (A) and has an appropriate molecular weight or polarity, the active energy ray-curable composition of the present invention can obtain good curability and good adhesion due to containing the resin of the present invention.

(Ethylenically unsaturated compound (A))

The ethylenically unsaturated compound (A) has an ethylenically unsaturated group, and is a component that is polymerized by a radical to have a high molecular weight. Since the ethylenically unsaturated compound (A) is crosslinked by an active energy ray, the active energy ray-curable composition of the present invention obtains good curability due to containing the ethylenically unsaturated compound (A).

Examples of the ethylenically unsaturated group include a vinyl group, an allyl group, and a (meth)acryloyl group. Among them, a (meth)acryloyl group is particularly preferable because of its high reactivity.

Examples of the ethylenically unsaturated compound (A) having a (meth)acryloyl group include a monofunctional (meth)acrylate having one ethylenically unsaturated group in the molecule and a polyfunctional (meth)acrylate having two or more ethylenically unsaturated groups in the molecule. The polyfunctional (meth)acrylate is preferably used because the molecules thereof are crosslinked with each other when the active energy ray-curable composition is cured, so that the curing rate is increased or a strong film is formed.

Specific examples of the monofunctional (meth)acrylate include methyl (meth)acrylate, ethyl (meth)acrylate, propyl (meth)acrylate, butyl (meth)acrylate, hexyl (meth)acrylate, octyl (meth)acrylate, nonyl (meth)acrylate, lauryl (meth)acrylate, stearyl (meth)acrylate, isostearyl (meth)acrylate, isobornyl (meth)acrylate, cyclohexyl (meth)acrylate, dicyclopentenyl (meth)acrylate, dicyclopentanyl (meth)acrylate, adamantyl (meth)acrylate, methyladamantyl (meth)acrylate, isoamyl (meth)acrylate, benzyl (meth)acrylate, 2-hydroxyethyl (meth)acrylate, and alkylene oxide adducts thereof.

Specific examples of the polyfunctional (meth)acrylate include 1,4-butanediol di(meth)acrylate, 1,6-hexanediol di(meth)acrylate, 1,9-nonanediol di(meth)acrylate, 1,10-decanediol di(meth)acrylate, neopentyl glycol di(meth)acrylate, tricyclodecanedimethanol di(meth)acrylate, trimethylolpropane tri(meth)acrylate, glycerin tri(meth)acrylate, pentaerythritol tetra(meth)acrylate, ditrimethylolpropane tetra(meth)acrylate, dipentaerythritol hexa(meth)acrylate, pentaerythritol tri(meth)acrylate, dipentaerythritol penta(meth)acrylate, glycerin di(meth)acrylate, diglycerin tri(meth)acrylate, diglycerin tetra(meth)acrylate, 2-hydroxy-3-acryloyloxypropyl (meth)acrylate, polyethylene glycol di(meth)acrylate, polypropylene glycol di(meth)acrylate, hydroxy pivalic acid neopentyl glycol di(meth)acrylate, N-acryloyloxyethylhexahydrophthalimide, acryloylmorpholine, oxazolidone acrylate, acrylamide, methacrylamide, butoxymethylacrylamide, hydroxyethylacrylamide, dimethylaminopropyl(meth)acrylamide, diacetone acrylamide, hydroxymethyl(meth)acrylamide, hydroxyethyl(meth)acrylamide, hydroxypropyl(meth)acrylamide, dihydroxyethylene bis(meth)acrylamide dimethylaminoethyl (meth)acrylate, diethylaminoethyl (meth)acrylate, 6-(diethylamino)hexyl(meth)acrylamide, isocyanuric acid diacrylate, isocyanuric acid triacrylate, and alkylene oxide adducts thereof.

The ethylenically unsaturated compound (A) may be used singly or two or more kinds thereof may be used in combination.

The content of the ethylenically unsaturated compound (A) in 100 mass% of the total amount of the active energy ray-curable composition is preferably 5 mass% or more and 90 mass% or less. When the content is 5 mass% or more, more preferably 10 mass% or more, and still more preferably 20 mass% or more, the curability and the adhesion of the active energy ray-curable composition are effectively improved. In addition, when the content is 90 mass% or less, more preferably 85 mass% or less, and still more preferably 80 mass% or less, the viscosity of the active energy ray-curable composition is secured, and scumming or misting at the time of printing or coating can be suppressed.

(Polyvalent isocyanate compound (C))

The active energy ray-curable composition of the present invention preferably contains a polyvalent isocyanate compound (C). The polyvalent isocyanate compound (C) is a component having two or more isocyanate groups that is to have a high molecular weight via an addition reaction. Since the polyvalent isocyanate compound (C) has high reactivity and high polarity, the active energy ray-curable composition of the present invention can obtain good adhesion due to containing the polyvalent isocyanate compound (C).

Specific examples of the polyvalent isocyanate compound (C) include hexamethylene diisocyanate (HDI), isophorone diisocyanate (IPDI), xylylene diisocyanate (XDI), toluene diisocyanate (TDI), diphenylmethane diisocyanate (MDI), and polyhydric alcohol adducts, isocyanurates, and biurets thereof. The polyvalent isocyanate compound (C) may be used singly or two or more kinds thereof may be used in combination.

(Polyhydric alcohol compound (D))

When the active energy ray-curable composition of the present invention contains the polyvalent isocyanate compound (C), it is preferable for the active energy ray-curable composition to also contain a polyhydric alcohol compound (D). The polyhydric alcohol compound (D) refers to an alcohol having two or more hydroxy groups in the molecule. When the polyhydric alcohol compound (D) is contained, the polyhydric alcohol compound (D) can effectively react with the polyvalent isocyanate compound (C) to form a cured product having high adhesion.

Specific examples of the polyhydric alcohol compound (D) include ethylene glycol, propanediol, butanediol, pentanediol, hexanediol, neopentyl glycol, glycerin, and structural isomers, ether-modified products, and ester-modified products thereof. The polyhydric alcohol compound (D) may be used singly or two or more kinds thereof may be used in combination.

(Urethane compound)

The active energy ray-curable composition of the present invention preferably contains a urethane compound. The urethane compound is a compound having a urethane linkage, and when the urethane compound is contained, the flexibility of a cured product is increased, and good adhesion can be obtained.

The urethane linkage is formed via a condensation reaction between an isocyanate group and a hydroxy group. Therefore, the urethane compound can take various forms by combining an isocyanate component and an alcohol component, which are raw materials. Specific examples of the urethane compound include a polyisocyanate that corresponds also to the polyvalent isocyanate compound (C), the polyisocyanate being obtained by reacting a polyhydric alcohol compound with a polyvalent isocyanate compound, a urethane (meth)acrylate that corresponds also to the ethylenically unsaturated compound (A), the urethane (meth)acrylate being obtained by reacting an isocyanate component with an alcohol component having a (meth)acryloyl group, and a polyurethane, which is obtained via a polyaddition reaction of a polyisocyanate with a polyol. Among them, urethane (meth)acrylate is preferable because good curability can be obtained. The urethane compound may be used singly or two or more kinds thereof may be used in combination.

The active energy ray-curable composition of the present invention can be used as, for example, an overcoat varnish, a paint, an adhesive, a photoresist, a 3D shaped object, or the like in addition to the printing ink, in the form of a material composed of the components as described above, or by being composed of the components as described above, being diluted with various organic solvents, or being combined with various materials. In these applications, the active energy ray-curable composition can be cured by an active energy ray, and can be used as, for example, an ultraviolet-curable overcoat varnish, an electron beam-curable overcoat varnish, an ultraviolet-curable adhesive, an electron beam-curable adhesive, or the like. Among them, use as an electron beam-curable adhesive is preferable because the composition can be instantaneously cured and good adhesion can be obtained.

The overcoat varnish, paint, adhesive, or photoresist of the present invention includes the active energy ray-curable composition of the present invention.

[Active energy ray-curable ink]

The active energy ray-curable ink (hereinafter also simply referred to as "ink") of the present invention includes the active energy ray-curable composition of the present invention. Owing to that the ink of the present invention contains the active energy ray-curable composition of the present invention, or more specifically, contains the resin of the present invention, the cohesive force of the ink under high shear at the time of printing can be increased. When the cohesive force of the ink is increased, the ink repellency against non-image areas is enhanced, and as a result, the anti-scumming property is improved. The scumming refers to a phenomenon in which printing is applied onto a substrate with some ink having attached to non-image areas of a plate, so that the ink forms a stain.

The content of the resin of the present invention in the ink of the present invention can be described with separation into some cases depending on the density of the pigment.

When the density of the pigment is less than 3.0 $g/cm^3$, the content of the resin of the present invention in the ink of the present invention is preferably 5 mass% or more and 40 mass% or less. When the content is 5 mass% or more, more preferably 8 mass% or more, and still more preferably 10 mass% or more, the anti-scumming property of the ink is improved. In addition, when the content is 50 mass% or less, more preferably 30 mass% or less, and still more preferably 20 mass% or less, the cohesive force inside the ink can be controlled, the tack can be lowered, and the register accuracy can be improved. Furthermore, the pigment dispersibility and fluidity of the ink can be kept good.

When the density of the pigment is 3.0 $g/cm^3$ or more, the content of the resin of the present invention in the ink of the present invention is preferably 3 mass% or more and 20 mass% or less. When the content is 3 mass% or more, more preferably 4 mass% or more, and still more preferably 5 mass% or more, the anti-scumming property of the ink is improved. In addition, when the content is 20 mass% or less, more preferably 15 mass% or less, and still more preferably 12 mass% or less, the cohesive force inside the ink can be controlled, the tack can be lowered, and the register accuracy can be improved. Furthermore, the pigment dispersibility and fluidity of the ink can be kept good.

(Polyfunctional (meth)acrylate (B))

The ink of the present invention contains a polyfunctional (meth)acrylate (B) as the ethylenically unsaturated compound (A) in the active energy ray-curable composition of the present invention. That is, in the ink of the present invention, the ethylenically unsaturated compound (A) is the polyfunctional (meth)acrylate (B). When the ink of the present invention contains the polyfunctional (meth)acrylate (B), the sensitivity of the ink having active energy ray curability to active energy rays is increased, and the adhesion to a substrate is improved. Herein, the functional number refers to the number of (meth)acryloyl groups.

The number of functional groups of the polyfunctional (meth)acrylate (B) is preferably 2 or more and 6 or less.

When the number of functional groups is 2 or more, and more preferably 3 or more, the curability of the ink is improved. Further, the ink is provided with an appropriate viscosity, so that the anti-scumming property is improved. When the number of functional groups is 6 or less, more preferably 5 or less, and still more preferably 4 or less, the ink fluidity can be kept good.

The number of rotatable bonds of the polyfunctional (meth)acrylate (B) is preferably 5 or more and 10 or less. When the number of rotatable bonds is set to 5 or more, and more preferably 6 or more, the polyfunctional (meth)acrylate (B) has moderate flexibility, and the compatibility with the resin is improved. When the number of rotatable bonds is 10 or less, and more preferably 8 or less, the rigidity of the polyfunctional (meth)acrylate (B) is increased, and the hot water resistance is improved.

The rotatable bond as used herein refers to an acyclic bond having at least one non-hydrogen substituent at an end atom and drawn as a single bond.

The polyfunctional (meth)acrylate (B) preferably has an alicyclic skeleton. When the polyfunctional (meth)acrylate (B) has an alicyclic skeleton, volume shrinkage of a coating film of the ink during curing by irradiation with an active energy ray is reduced, and adhesive force to a substrate can be maintained even after hot water treatment.

The alicyclic skeleton is preferably a condensed ring skeleton because this is more rigid, exhibits smaller volume shrinkage during curing, and improves film properties of the cured film such as scratch resistance. Examples of the condensed ring skeleton include a norbornane skeleton, an adamantane skeleton, a tricyclodecane skeleton, and a dicyclopentadiene skeleton, and a tricyclodecane skeleton is particularly preferable.

The polyfunctional (meth)acrylate (B) preferably has an ovality represented by the following formula of 1.0 or more and 3.0 or less.

$$O = A/[4\pi \times (3 \times V/4\pi)^{2/3}]$$

where

O: ovality
A: surface area of molecule
V: volume of molecule.

When the ovality is 1.0 or more, more preferably 1.1 or more, and still more preferably 1.2 or more, moderate flexibility is obtained, and the compatibility of the polyfunctional (meth)acrylate (B) with the resin is improved. In addition, when the ovality is 3.0 or less, more preferably 2.0 or less, and still more preferably 1.5 or less, volume shrinkage of a coating film of the ink during curing is small, and film properties of the cured film such as scratch resistance are good.

The polyfunctional (meth)acrylate (B) preferably contains both a hydrophobic (meth)acrylate and a hydrophilic (meth)acrylate. As a result, the stringiness of the ink can be suppressed, and misting (a phenomenon in which, during rotation of a printing machine, the ink is released from the machine in a misty form and scattered) can be inhibited.

The hydrophobic (meth)acrylate as used herein refers to a highly hydrophobic (meth)acrylate having no atoms other than carbon and hydrogen in the skeleton portion excluding (meth)acryloyl groups.

Specific examples of the hydrophobic (meth)acrylate include 1,4-butanediol di(meth)acrylate, 1,6-hexanediol di(meth)acrylate, 1,9-nonanediol di(meth)acrylate, 1,10-decanediol di(meth)acrylate, neopentyl glycol di(meth)acrylate, tricyclodecanedimethanol di(meth)acrylate, trimethylolpropane tri(meth)acrylate, glycerin tri(meth)acrylate, pentaerythritol tetra(meth)acrylate, ditrimethylolpropane tetra(meth)acrylate, and dipentaerythritol hexa(meth)acrylate. Among them, tricyclodecane dimethanol di(meth)acrylate is particularly preferable. Alkylene oxide adducts of these hydrophobic (meth)acrylates are classified into the hydrophilic (meth)acrylate described later.

The hydrophilic (meth)acrylate as used herein refers to a highly hydrophilic (meth)acrylate having an oxygen atom, a nitrogen atom, or the like in a skeleton portion excluding (meth)acryloyl groups.

Examples of the functional group of the hydrophilic (meth)acrylate include an ethylene oxide group, a propylene oxide group, a hydroxy group, a carboxy group, a carbonyl group, an amide group, and an amine group. An ethylene oxide group and a hydroxy group are preferable, and a hydroxy group is particularly preferable because these groups can keep appropriate compatibility with a resin or a hydrophobic monomer and impart appropriate viscosity to the ink, so that the anti-scumming property can be improved.

Specific examples of the hydrophilic (meth)acrylate include pentaerythritol tri(meth)acrylate, dipentaerythritol penta(meth)acrylate, glycerin di(meth)acrylate, diglycerin tri(meth)acrylate, diglycerin tetra(meth)acrylate, 2-hydroxy-3-acryloyloxypropyl (meth)acrylate, polyethylene glycol di(meth)acrylate, polypropylene glycol di(meth)acrylate, hydroxy pivalic acid neopentyl glycol di(meth)acrylate, N-acryloyloxyethylhexahydrophthalimide, acryloylmorpholine, oxazolidone acrylate, acrylamide, methacrylamide, butoxymethylacrylamide, hydroxyethylacrylamide, dimethylaminopropyl(meth)acrylamide, diacetone acrylamide, hydroxymethyl(meth)acrylamide, hydroxypropyl(meth)acrylamide, dihydroxyethylene bis(meth)acrylamide dimethylaminoethyl (meth)acrylate, diethylaminoethyl (meth)acrylate, 6-(diethylamino)hexyl(meth)acrylamide, isocyanuric acid diacrylate, isocyanuric acid triacrylate, and alkylene oxide adducts thereof. Among them, pentaerythritol tri(meth)acrylate and diglycerin tetra(meth)acrylate are particularly preferable because they can keep appropriate compatibility with the resin and the hydrophobic monomer, and can impart an appropriate viscosity to the ink.

When the polyfunctional (meth)acrylate (B) contains both the hydrophobic (meth)acrylate and the hydrophilic (meth)acrylate, the content of the hydrophilic (meth)acrylate based on 100 parts by mass of the hydrophobic (meth)acrylate is preferably 20 parts by mass or more and 500 parts by mass or less. When the content of the hydrophilic (meth)acrylate is 20 parts by mass, more preferably 40 parts by mass or more, and still more preferably 60 parts by mass or more, moderate compatibility between the polyfunctional (meth)acrylates (B) and between the polyfunctional (meth)acrylate (B) and the resin can be kept, and moderate viscosity can be imparted to the ink. When the content of the hydrophilic (meth)acrylate is 500 parts by mass or less, more preferably 250 parts by mass or less, and still more preferably 150 parts by mass or less, wettability to a substrate is improved, and printing density is improved.

The polyfunctional (meth)acrylate (B) preferably contains both a (meth)acrylate having a n-octanol/water partition coefficient (Log P) of 2.0 or more and a (meth)acrylate having a Log P of less than 2.0. As a result, the stringiness of the ink can be suppressed, and misting, namely, a phenomenon in which, during rotation of a printing machine, the ink is released from the machine in a misty form and scattered) can be inhibited. Log P is calculated from the molecular structure of the polyfunctional (meth)acrylate (B) on the basis of Molecular Networks' chemoinformatics platform MOSES.

Specific examples of the (meth)acrylate having a Log P of 2.0 or more include those recited as examples of the hydrophobic (meth)acrylate described above, and propylene oxide adducts of general-purpose (meth)acrylates such as propylene oxide-modified trimethylolpropane tri(meth)acrylate and propylene oxide-modified glycerin tri(meth)acrylate.

Specific examples of the (meth)acrylate having a Log P of less than 2.0 include those recited as examples of the hydrophilic (meth)acrylate described above.

When the polyfunctional (meth)acrylate (B) contains both the (meth)acrylate having a Log P of 2.0 or more and the (meth)acrylate having a Log P of less than 2.0, the content of the (meth)acrylate having a Log P of less than 2.0 based on 100 parts by mass of the (meth)acrylate having a Log P of 2.0 or more is preferably 20 parts by mass or more and 500 parts by mass or less. When the content is 20 parts by mass or more, more preferably 40 parts by mass or more, and still more preferably 60 parts by mass or more, moderate compatibility between the polyfunctional (meth)acrylates (B) and between the polyfunctional (meth)acrylate (B) and the resin can be kept, and moderate viscosity can be imparted to the ink. When the content is 500 parts by mass or less, more preferably 250 parts by mass or less, and still more preferably 150 parts by mass or less, wettability to a substrate is improved, and printing density is improved.

The polyfunctional (meth)acrylate (B) preferably has a molecular weight of 200 or more and 1000 or less. When the molecular weight is 200 or more, more preferably 250 or more, and still more preferably 300 or more, moderate flexibility is obtained, and compatibility with the resin is improved. When the molecular weight is 1000 or less, more preferably 900 or less, and still more preferably 800 or less, the curability of the ink is improved.

The content of the polyfunctional (meth)acrylate (B) in the total amount of 100 mass% of the ink is preferably 40 mass% or more and 90 mass% or less. When the content is 40 mass% or more, more preferably 50 mass% or more, and still more preferably 60 mass% or more, the fluidity and curability of the ink are improved. When the content is 90 mass% or less, more preferably 85 mass% or less, and still more preferably 80 mass% or less, the viscosity of the ink is secured, and scumming and misting at the time of printing can be inhibited.

(Polymerization inhibitor)

The ink of the present invention preferably contains a polymerization inhibitor. When the polymerization inhibitor is contained, good storage stability of the ink can be obtained.

Specific examples of the polymerization inhibitor include hydroquinone, a monoester product of hydroquinone, N-nitrosodiphenylamine, phenothiazine, p-t-butylcatechol, N-phenylnaphthylamine, 2,6-di-t-butyl-p-methyl phenol, chloranil, and pyrogallol.

The content of the polymerization inhibitor in the ink is preferably 0.001 mass% or more. When the ink contains 0.001 mass% or more of the polymerization inhibitor, good storage stability can be effectively obtained. In addition, the content of the polymerization inhibitor in the ink is preferably 5 mass% or less. When the content of the polymerization inhibitor in the ink is set to 5 mass% or less, good sensitivity can be maintained.

[Pigment dispersant]

The ink of the present invention preferably contains a pigment dispersant. The pigment dispersant acts on the surface of the pigment to suppress aggregation of the pigment. As a result, the pigment dispersibility is enhanced, and the fluidity of the ink can be improved.

The content of the pigment dispersant is preferably 5 parts by mass or more and 50 parts by mass or less based on 100 parts by mass of the pigment. Within this range, the fluidity of the ink can be effectively improved.

[Other additives]

For the ink of the present invention, other additives such as a photoinitiator, a surfactant, a wax, an antifoaming agent, a transferability improver, and a leveling agent can be used.

The ink of the present invention has a loss tangent tan $\delta_i$ of 1.0 or more and 4.0 or less as measured with a parallel plate vibration rheometer of JIS K 7244-10: 2005 at 25°C, an angular velocity of 400 rad/s, and a strain of 40%. When the tan $\delta_i$ is set to 1.0 or more, preferably 1.5 or more, and more preferably 2.0 or more, the viscosity of the ink is increased, and the fluidity of the ink and the leveling of the ink can be improved. In addition, when the tan $\delta_i$ is set to 4.0 or less, more preferably 3.0 or less, and still more preferably 2.5 or less, tack can be suppressed and the register accuracy can be improved.

The ink of the present invention preferably has a viscosity $\eta_{0.5}$ of 20 Pa·s or more and 200 Pa·s or less as measured by a cone-plate rotational viscometer under the conditions of 35°C and a rotational speed of 0.5 rpm. When the $\eta_{0.5}$ is set to 20 Pa·s or more, good ink transferability between rollers can be obtained. When the $\eta_{0.5}$ is set to 200 Pa·s or less, more preferably 150 Pa·s or less, and still more preferably 100 Pa·s or less, the fluidity of the ink is improved, the leveling property on a printed matter is improved, and the opacity can be improved.

The ink of the present invention preferably has a viscosity $\eta_{50}$ of 5 Pa·s or more and 50 Pa·s or less as measured with a cone-plate rotational viscometer under the conditions of 35°C and a rotational speed of 50 rpm. When the $\eta_{50}$ is set to 5 Pa·s or more, more preferably 10 Pa·s or more, and still more preferably 15 Pa·s or more, the anti-scumming property of the ink is improved.

When the $\eta_{50}$ is set to 50 Pa·s or less, the fluidity can be improved.

In the ink of the present invention, the ratio $\eta_{50}/\eta_{0.5}$ of the viscosity $\eta_{50}$ to the viscosity $\eta_{0.5}$ is preferably 0.25 or more and 0.6 or less. When $\eta_{50}/\eta_{0.5}$ is set to 0.30 or more and 0.55 or less, and more preferably 0.35 or more and 0.50 or less, the ink approaches a Newtonian fluid, and a constant viscosity can be maintained regardless of shear strength. In general, a high shear is applied at the time of printing, the structural viscosity of the ink composition collapses, and the viscosity decreases. However, in the ink in such a preferable embodiment, viscosity reduction due to shear is small, and a high viscosity is maintained under a high shear. As a result, the cohesive force of the ink is high under a high shear as in the case of printing, and ink repellency against non-image areas is improved, so that the anti-scumming property is improved.

[Method for producing ink]

A method for producing the ink of the present invention will be described below. However, the ink of the present invention is not limited to those produced by the following embodiments.

The ink of the present invention can be obtained by heating and dissolving a resin of the present invention, a polyfunctional (meth)acrylate (B), a pigment, and other components at 5°C to 100°C as necessary, and then homogeneously mixing and dispersing them with a stirring/kneading machine such as a kneader, a three-roll mill, a ball mill, a planetary ball mill, a beads mill, a roll mill, an attritor, a sand mill, a gate mixer, a paint shaker, a homogenizer, or a planetary centrifugal mixer.

After being mixed and dispersed or during being mixed and dispersed, defoaming in a vacuum or under a reduced pressure is also preferably performed.

[Method for producing printed matter]

The method for producing a printed matter of the present invention includes a step of irradiating the active energy ray-curable composition of the present invention with an active energy ray after applying the active energy ray-curable composition to a substrate.

Examples of the substrate include art paper, coated paper, cast paper, synthetic paper, newsprint paper, aluminum-deposited paper, metal, and plastic film.

Examples of the plastic film include polyethylene terephthalate, polyethylene, polyester, polyamide, polyimide, polystyrene, polypropylene, polycarbonate, and polyvinyl acetal.

Furthermore, examples of the plastic film include, in addition to the plastic film itself, plastic film-laminated paper in which a plastic film is laminated on paper, and a metal-deposited plastic film in which metal such as aluminum, zinc, or copper is deposited on plastic.

Further, the plastic film is preferably subjected to a surface treatment, for example, coating of a primer resin, a corona discharge treatment, or a plasma treatment in order to impart easy adhesiveness.

As a method of applying the active energy ray-curable composition to the substrate in the method for producing a printed matter of the present invention, for example, flexographic printing, offset printing (lithographic printing), gravure printing, screen printing, bar coater, or the like can be adopted. In particular, lithographic printing is preferable, and the method of lithographic printing includes lithographic printing using dampening water and waterless lithographic printing, and waterless lithographic printing is more preferable.

The method for producing a printed matter of the present invention includes a step of curing the active energy ray-curable composition applied to the substrate using an active energy ray.

The active energy ray may be any ray as long as it has an excited energy necessary for the curing reaction, and examples preferably include ultraviolet rays and electron beams. Among them, an electron beam is more preferable from the viewpoint of curing sensitivity.

When the curing is conducted by using an electron beam, an electron beam apparatus having an energy ray with an accelerating voltage of 80 to 300 kV is suitably used. The absorbed dose of the printed matter is preferably 10 kGy or more at which a favorable curing sensitivity of the active energy ray-curable composition is attained. In addition, the absorbed dose is preferably 70 kGy or less which has a small influence on the substrate.

In the case of curing with ultraviolet rays, an ultraviolet irradiation device such as a high-pressure mercury lamp, a xenon lamp, a metal halide lamp, or a light emitting diode is preferably used. Among them, it is preferable to use a light emitting diode that emits a bright line having a wavelength of 350 to 420 nm from the viewpoint of power saving and cost reduction.

The method for producing printed matter of the present invention may include a step of performing treatment in hot water at 90°C or more and 150°C or less. By performing the treatment at 90°C or more, preferably 100°C or more, and more preferably 110°C or more, a high sterilization effect can be obtained. By performing the treatment at 150°C or less, more preferably 140°C or less, and still more preferably 130°C or less, the influence on the printed matter can be reduced.

EXAMPLES

Hereinafter, the present invention will be specifically described with reference to Examples. However, the present invention is not limited thereto.

[Measuring and evaluating method and processing method]

(1) Weight average molecular weight Mw, number average molecular weight Mn, dispersity PDI

The weight average molecular weight of a resin is measured by gel permeation chromatography (GPC) using tetrahydrofuran as a mobile phase. The resin was fractionated using a column (Shodex KF-803), and the weight average molecular weight Mw and the number average molecular weight Mn were calculated using a calibration curve based on polystyrene. In addition, the dispersity PDI was calculated as Mw/Mn.

(2) Acid value

The acid value of a resin was determined in accordance with the neutralization titration in Section 3.1 of the test method of JIS K 0070: 1992.

(3) Tg

The glass transition temperature Tg of a resin was measured in accordance with JIS K 7121: 2012. Using a differential scanning calorimeter (DSC6200 manufactured by Seiko Instruments Inc.), about 5 mg of a resin sample was filled in an aluminum pan. As conditioning of a test piece, the temperature was raised from 30°C to 200°C at a rate of 10°C/min and then held at 200°C for 5 minutes, and the temperature was lowered from 200°C to 0°C at a rate of 10°C/min and then held at 0°C for 10 minutes. Subsequently, the temperature was raised from 0°C to 200°C at a rate of 10°C/min. In a DSC curve produced in this course, Tg is defined by the temperature at the intersection between a straight line obtained by extending the low-temperature side base line to the high temperature side and the tangent line drawn at the point where the stepwise changing section of the grass transition curve has the maximum gradient.

(4) Loss tangent tan $\delta_r$ of resin

Measurement was performed in accordance with JIS K 7244-10: 2005. A parallel plate ($\varphi = 25$ mm) was attached to a parallel plate vibration rheometer (MCR301 manufactured by Anton Paar), and a resin powder was heated to 180°C, melted, cooled to 160°C, and held for 5 minutes, and then a loss tangent tan $\delta_r$ at a strain of 10% and an angular velocity of 10 rad/s was measured.

(5) Loss tangent tan $\delta_i$ of ink

Measurement was performed in accordance with JIS K 7244-10: 2005. A parallel plate ($\varphi = 25$ mm) was attached to a parallel plate vibration rheometer (MCR301 manufactured by Anton Paar), and the loss tangent tan $\delta_i$ of an ink at 25°C, a strain of 40%, and an angular velocity of 400 rad/s was measured.

(6) Tack value (low tackiness)

Measurement was performed in accordance with 4.2 of JIS K5701-1: 2000. 1.31 mL of an ink weighed with an ink pipette was measured at a rotational speed of 400 rpm at 38°C using an inkometer ("INKO-GRAPH" TYPE V manufactured by TESTER SANGYO CO,. LTD.). The value measured 1 minute after the start of measurement was taken as the tack value in the present invention. As a tack value at which good register accuracy was attained, evaluation was performed according to the following criteria.

C (poor): The tack value is more than 12.
B (good): The tack value is 12 or less.
A (better): The tack value is 10 or less.
AA (very good): The tack value is 8 or less.

(7) Waterless printing

A waterless lithographic printing plate (TAC-VG5, manufactured by Toray Industries, Inc.) was mounted on an offset rotary printing machine (CI-8, manufactured by COMEXI), and a test pattern (175 line: 1% to 50% halftone dot, thin line having a width of 30 $\mu$m, independent point having a diameter of 120 $\mu$m, punched line having a width of 300 $\mu$m, and solid portion) was printed on a polyester film (PTM 12 manufactured by Unitika Inc.) having a thickness of 12 um by 1,000 m back-printing with the ink specified in each of examples, comparative examples, and reference examples at a printing temperature of 30°C, a printing speed of 200 m/min, and an ink supply amount of 50%. Thereafter, the film was irradiated with an electron beam at an accelerating voltage of 110 kV and a dose of 30 kGy to cure the ink, and thus a printed matter was obtained. However, for the white ink, the ink supply amount was adjusted such that the cyan reflection density of the solid portion was 1.8.

(8) Leveling of ink

A test pattern was printed by the printing method (7). The unevenness of the solid portion of the test pattern was visually observed and also observed with a loupe of 25 magnification, and evaluated according to the following criteria.

C (poor): Unevenness is visually confirmed.
B (good): It is difficult to visually confirm unevenness, and unevenness is confirmed with the loupe.
A (better): Small irregularities are observed with the loupe.
AA (very good): Irregularities are hardly observed even with the loupe.

(9) Heat resistance

A printed matter was obtained in the same manner as in the above (7) except that a polyamide substrate (manufactured by UNITIKA Ltd., ONM) was used as the substrate. The printed matter was coated with a polyurethane-based adhesive mixture (TAKELAC A-969V/TAKENATE A-5 (both manufactured by Mitsui Chemicals, Inc.) was blended at a mass ratio of 3/1, and appropriately diluted with ethyl acetate) with a bar coater with the size No. 8 to a thickness of about 10 $\mu$m, laminated with a 50 $\mu$m-thick LLDPE film (Futamura Chemical Co., Ltd.), and aged at 40°C for 72 hours, and then adhesion was measured. Adhesion was also measured for a sample further treated in hot water at 95°C for 30 minutes after the aging. The measurement sample used was one cut to have a width of 1.5 cm. The substrate and a part of the LLDPE film were peeled off, and measurement was performed using TENSILON (RTG-1210 manufactured by A&D Co., Ltd.) under the measurement conditions of a load cell of 50 N and a speed of 300 mm/min. Since it can be stated that the heat resistance is high when the adhesion does not decrease even after the hot water treatment, evaluation was performed according to the following criteria. In the present invention, the score A or more is regarded as acceptable.

C: After the hot water treatment, the adhesive force decreases by more than 3.0 N.
B: The decrease in adhesive force after the hot water treatment is more than 2.0 N and 3.0 N or less.
A (better): The decrease in adhesive force after the hot water treatment is more than 1.0 N and 2.0 N or less.
AA (very good): The decrease in adhesive force after the hot water treatment is 1.0 N or less.

(10) Curability

A test pattern was printed by the printing method (7). The solid portion of the test pattern was subjected to rubbing evaluation using gauze and nails, and evaluated according to the following criteria.

C (poor): The printed test pattern easily peels off when rubbed with gauze.
B (good): The printed test pattern peels off when strongly rubbed with gauze.
A (better): The printed test pattern peels off when strongly rubbed with a nail.
AA (very good): The printed test pattern does not peel off even when strongly rubbed with a nail.

(11) Misting resistance

A test pattern was printed by the printing method (7). At that time, coated paper was placed in the vicinity of a kneading roll, and the density of the ink scattered to the coated paper was measured using a reflection densitometer (SpectroEye manufactured by GretagMacbeth) with a white coated paper as a reference, and evaluated according to the following criteria.

C (poor): The reflection density exceeds 0.20.
B (good): The reflection density is 0.20 or less.
A (better): The reflection density is 0.10 or less.
AA (very good): The reflection density is 0.05 or less.

(12) Anti-scumming property

A test pattern was printed by the printing method (7). The reflection density in a non-image area adjacent to a solid portion of the test pattern was measured using a reflection densitometer (SpectroEye from GretagMacbeth) with a white coated paper as a reference, and evaluated according to the following criteria.

C (poor): The reflection density exceeds 0.20.
B (good): The reflection density is 0.20 or less.
A (better): The reflection density is 0.10 or less.
AA (very good): The reflection density is 0.05 or less.

(13) Fluidity

The fluidity was measured in accordance with JIS K 5701: 2000. 0.5 mL of the composition designated in each of Examples, Comparative Examples, and Reference Examples was weighed into a parallel-plate viscometer (PI-702 manufactured by Tester Sangyo Co., Ltd.), and then a weighting plate was dropped. The spread diameter of the composition read one minute after the dropping and evaluated according to the following criteria.

C (poor): The spread diameter is less than 20 mm.
B (good): The spread diameter is 20 mm or more and less than 25 mm.
A (better): The spread diameter is 25 mm or more.

(14) Curing sensitivity

The composition designated in each of Examples, Comparative Examples, and Reference Examples was applied to a polyamide substrate (manufactured by UNITIKA Ltd., ONM) with a bar coater with the size No. 8 to a thickness of about 10 um. Thereafter, the composition was cured by irradiation with an electron beam at an accelerating voltage of 110 kV and a dose of 10 kGy, and then rubbing evaluation was performed using gauze. The electron beam irradiation was repeated until the composition did not peel off, and evaluation was performed according to the following criteria.

EP 4 410 849 A1

C (poor): Peeling occurs even after the third irradiation.
B (good): Peeling does not occur after the third irradiation.
A (better): Peeling does not occur after the second irradiation.
AA (very good): Peeling does not occur after the first irradiation.

(15) Adhesion

The composition designated in each of Examples, Comparative Examples, and Reference Examples was applied to a polyamide substrate (manufactured by UNITIKA Ltd., ONM) with a bar coater with the size No. 8 to a thickness of about 10 um, and irradiated with an electron beam at an accelerating voltage of 110 kV and a dose of 30 kGy, and thereby the composition was cured. A cellophane tape (CT-24, manufactured by NICHIBAN Co., Ltd.) having a length of 3 cm was attached to the surface of the cured composition, and immediately peeled off, and the peeled area was observed. Evaluation was performed according to the following criteria.

C (poor): The peeled area exceeds 80% of the attached area.
B (good): The peeled area is 80% or less of the attached area.
A (better): The peeled area is 50% or less of the attached area.
AA (very good): The peeled area is 20% or less of the attached area.

<Starting materials for ink>

[Resin]

(Resin 1)

A reaction vessel equipped with a stirrer, a reflux condenser, a thermometer, and a nitrogen gas introduction tube was charged with 150 parts by mol of propylene glycol monomethyl ether acetate (hereinafter, PGMEA), 56 parts by mol of styrene, 14 parts by mol of methyl acrylate, and 30 parts by mol of acrylic acid as solvents, and 4 parts by mol of 2,2'-azobis(2-methylbutyronitrile (hereinafter, ABN-E) was added as a polymerization initiator. The mixture was subjected to a dropwise polymerization reaction under reflux and stirring at 140°C for 1.5 hours, and kept at this temperature for 1 hour. Thereafter, the temperature was raised to 160°C, and the solvents were distilled off while stirring was continued at normal pressure. Next, the pressure was reduced to 50 mHg or less at that temperature, and the solvents were completely distilled off, affording Resin 1 having a weight average molecular weight (hereinafter, Mw) of 24,000, a number average molecular weight (hereinafter, Mw) of 3,000, an acid value of 175 mg KOH/g, and a Tg of 90. The composition and properties are shown in Table 1.

Description of abbreviations in Table 1

PGMEA: propylene glycol monomethyl ether acetate
St: styrene
$\alpha$MS: $\alpha$-methylstyrene
MA: methyl acrylate
BA: butyl acrylate
2EHA: 2-ethylhexyl acrylate
LA: dodecyl acrylate
MMA: methyl methacrylate
AA: acrylic acid
MAA: methacrylic acid
ABN-E: 2,2'-azobis(2-methylbutyronitrile).

(Resin 2 to 12)

Resin 2 to 12 were obtained in the same manner as in Resin 1 except that the resin composition, the weight average molecular weight, and the number average molecular weight were changed as shown in Table 1. It is noted that the tan $\delta_r$ of Resin 10 could not be measured because the resin was not melted.

14

[Table 1]

| | | Resin 1 | Resin 2 | Resin 3 | Resin 4 | Resin 5 | Resin 6 | Resin 7 | Resin 8 | Resin 9 | Resin 10 | Resin 11 | Resin 12 |
|---|---|---|---|---|---|---|---|---|---|---|---|---|---|
| Composition (parts by mol) | St | 56 | 61 | 65 | 75 | 65 | 65 | 65 | 59 | 15 | 50 | 40 | 100 |
| | αMS | - | - | - | - | - | - | - | - | - | 20 | - | - |
| | MA | 14 | 9 | 5 | 0.1 | - | - | - | 11 | 60 | - | 20 | - |
| | BA | - | - | - | - | 5 | - | - | - | 3 | - | - | - |
| | 2EHA | - | - | - | - | - | 5 | - | - | 17 | - | - | - |
| | LA | - | - | - | - | - | - | 5 | - | - | - | - | - |
| | MMA | - | - | - | - | - | - | - | - | - | - | - | - |
| | AA | 30 | 30 | 30 | 25 | 30 | 30 | 30 | 30 | 5 | - | 40 | - |
| | MAA | - | - | - | - | - | - | - | - | - | 30 | - | - |
| | PGMEA | 150 | 150 | 150 | 150 | 150 | 150 | 150 | 150 | 150 | 150 | 150 | 150 |
| | ABN-E | 4 | 4 | 4 | 4 | 4 | 4 | 4 | 4 | 4 | 4 | 4 | 4 |
| Physical properties | Mw | 24000 | 25000 | 26000 | 27000 | 26000 | 25000 | 23000 | 25000 | 10000 | 27000 | 25000 | 25000 |
| | Mn | 3000 | 3500 | 5000 | 6000 | 5000 | 5000 | 4000 | 4000 | 500 | 5000 | 4500 | 5000 |
| | PDI | 8.0 | 7.1 | 5.2 | 4.5 | 5.2 | 5.0 | 5.8 | 6.3 | 20.0 | 5.4 | 5.6 | 5.0 |
| | Acid value | 175 | 180 | 180 | 140 | 185 | 185 | 170 | 180 | 30 | 170 | 250 | 0 |
| | Tg | 90 | 105 | 120 | 139 | 128 | 120 | 112 | 101 | 50 | 155 | 105 | 103 |
| | $\tan\delta_r$ | 12.0 | 6.0 | 1.8 | 1.3 | 2.0 | 2.3 | 2.5 | 9.0 | 50.0 | - | 9.0 | 10.0 |

[Polyfunctional (meth)acrylate (B)]

B1: isobornyl acrylate (Light Acrylate IB-XA manufactured by Kyoeisha Chemical Co., Ltd.). Number of rotatable bonds: 3, Log P: 3.7.
B2: methyladamantyl acrylate (MADA manufactured by Osaka Organic Chemical Industry Ltd.). Number of rotatable bonds: 3, Log P: 3.6.
B3: dicyclopentanyl acrylate (FANCRYL FA-513AS manufactured by Showa Denko Materials Co., Ltd.). Number of rotatable bonds: 3, Log P: 3.4.
B4: Tricyclodecane dimethanol diacrylate ("Miramer" (registered trademark) M262 (manufactured by MIWON)). Number of rotatable bonds: 8, Log P: 3.9.
B5: ethylene oxide-modified trimethylolpropane triacrylate ("Miramer" (registered trademark) M3130 (manufactured by MIWON)). Number of rotatable bonds: 22, Log P: 1.8.
B6: ethylene oxide-modified trimethylolpropane triacrylate ("Miramer" (registered trademark) M3190 (manufactured by MIWON)). Number of rotatable bonds: 40, Log P: 0.7.
B7: ethylene oxide-modified pentaerythritol tetraacrylate ("Miramer" (registered trademark) M4004 (manufactured by MIWON)). Number of rotatable bonds: 28, Log P: 1.0.
B8: mixture of glycerin diacrylate and triacrylate (ARONIX M-920 manufactured by Toagosei Co., Ltd.). Number of rotatable bonds: 8 to 11, Log P: 0.4.
B9: mixture of pentaerythritol triacrylate and pentaerythritol tetraacrylate ("Miramer" (registered trademark) M340 (manufactured by MIWON)). Number of rotatable bonds: 13 to 16, Log P: 1.1.
B10: propylene oxide-modified trimethylolpropane triacrylate ("Miramer" (registered trademark) M360 (manufactured by MIWON)). Number of rotatable bonds: 22, Log P: 3.2.
B11: propylene oxide-modified glycerin triacrylate ("Miramer" (registered trademark) M320 (manufactured by MIWON)). Number of rotatable bonds: 20, Log P: 2.1.

[Pigment]

Pigment: cyan pigment ("Seika" Cyanine Blue 4920 manufactured by Dainichiseika Color & Chemicals Mfg. Co., Ltd.)

<Active energy ray-curable composition raw materials>

[Resin]

(Resins 2, 3, 6)

Resins 2, 3, and 6 obtained as described above were used as resins for an active energy ray-curable composition raw material.

[Ethylenically unsaturated compound (A)]

B6: ethylene oxide-modified trimethylolpropane triacrylate ("Miramer" (registered trademark) M3190 (manufactured by MIWON)) .
B7: ethylene oxide-modified pentaerythritol tetraacrylate ("Miramer" (registered trademark) M4004 (manufactured by MIWON)) .

[Polyvalent isocyanate compound (C)]

C1: adhesive for dry lamination (TAKENATE A-5 (manufactured by Mitsui Chemicals, Inc.)).
C2: adhesive for solventless lamination (TAKENATE A-244A (manufactured by Mitsui Chemicals, Inc.)).

[Polyhydric alcohol compound (D)]

D1: adhesive for dry lamination (TAKELAC A-969V (manufactured by Mitsui Chemicals, Inc.)).
D2: adhesive for solventless lamination (TAKELAC A-244B (manufactured by Mitsui Chemicals, Inc.)).

[Urethane compound]

E1: urethane acrylate (UF-8001G (manufactured by Kyoeisha Chemical Co., Ltd.))
E1 also corresponds to the ethylenically unsaturated compound (A).

[Comparative Example 1]

With the ink composition shown in Table 2, Resin 1, the polyfunctional (meth)acrylate (B1), and a pigment were weighed, and kneaded three times at a speed of 500 rpm at a gap 1 using a three-roll mill ("EXAKT" (registered trademark) M-80S manufactured by EXAKT), affording an ink.
The evaluation results of the obtained ink are shown in Table 2. The low tackiness was "good", the leveling of the ink, the curability, the misting resistance, and the anti-scumming property were "better", and the heat resistance was unacceptable.

[Example 1]

With the ink composition shown in Table 2, Resin 2, the polyfunctional (meth)acrylate (B1), and a pigment were weighed, and kneaded three times at a speed of 500 rpm at a gap 1 using a three-roll mill ("EXAKT" (registered trademark) M-80S manufactured by EXAKT), affording an ink.
The evaluation results of the obtained ink are shown in Table 2. Since the Tg of the resin was 105°C, the low tackiness was "better".

[Example 2]

An ink was obtained in the same manner as in Example 1 except that raw materials were weighed with the ink composition shown in Table 2.
The evaluation results of the obtained ink are shown in Table 2. Since the Tg of the resin was 120°C, the low tackiness was "very good".

[Example 3]

An ink was obtained in the same manner as in Example 1 except that raw materials were weighed with the ink composition shown in Table 2.
The evaluation results of the obtained ink are shown in Table 2. Since the Tg of the resin was 139°C, the low tackiness was "very good", the leveling of the ink was "good", and the fluidity was "good".

[Example 4]

An ink was obtained in the same manner as in Example 1 except that raw materials were weighed with the ink composition shown in Table 2.
The evaluation results of the obtained ink are shown in Table 2. Since the number of carbon atoms of the acrylic acid alkyl ester of the resin was 4, the low tackiness was "very good".

[Example 5]

An ink was obtained in the same manner as in Example 1 except that raw materials were weighed with the ink composition shown in Table 2.
The evaluation results of the obtained ink are shown in Table 2. Since the number of carbon atoms of the acrylic acid alkyl ester of the resin was 8, the low tackiness and the leveling of the ink were "very good".

[Example 6]

An ink was obtained in the same manner as in Example 1 except that raw materials were weighed with the ink composition shown in Table 2.

The evaluation results of the obtained ink are shown in Table 2. Since the number of carbon atoms of the acrylic acid alkyl ester of the resin was 12, the low tackiness and the leveling of the ink were "very good" and the anti-scumming property was "good".

[Example 7]

An ink was obtained in the same manner as in Example 1 except that raw materials were weighed with the ink composition shown in Table 2.

The evaluation results of the obtained ink are shown in Table 2. Since the content of the acrylic acid alkyl ester of the resin was more than 10.0 mol%, the anti-scumming property was "good".

[Table 2]

| | | Comparative Example 1 | Example 1 | Example 2 | Example 3 | Example 4 | Example 5 | Example 6 | Example 7 |
|---|---|---|---|---|---|---|---|---|---|
| Composition (mass%) | Resin 1 | 15 | - | - | - | - | - | - | - |
| | Resin 2 | - | 15 | - | - | - | - | - | - |
| | Resin 3 | - | - | 15 | - | - | - | - | - |
| | Resin 4 | - | - | - | 15 | - | - | - | - |
| | Resin 5 | - | - | - | - | 15 | - | - | - |
| | Resin 6 | - | - | - | - | - | 15 | - | - |
| | Resin 7 | - | - | - | - | - | - | 15 | - |
| | Resin 8 | - | - | - | - | - | - | - | 15 |
| | B5 | 67 | 67 | 67 | 67 | 67 | 67 | 67 | 67 |
| | Pigment | 18 | 18 | 18 | 18 | 18 | 18 | 18 | 18 |
| Ink properties | $\tan\delta_i$ | 3.9 | 3.1 | 2.4 | 1.1 | 1.8 | 2.3 | 2.9 | 2.9 |
| Quality | Low tackiness | B | A | AA | AA | AA | AA | AA | A |
| | Leveling of ink | A | A | A | B | A | AA | AA | A |
| | Heat resistance | B | A | A | A | A | A | A | A |
| | Curability | A | A | A | A | A | A | A | A |
| | Misting resistance | A | A | A | A | A | A | A | A |
| | Anti-scumming property | A | A | A | A | A | A | B | B |
| | Fluidity | A | A | A | B | A | A | A | A |

[Examples 8 and 9]

An ink was obtained in the same manner as in Example 1 except that raw materials were weighed with the ink composition shown in Table 3.

The evaluation results of the obtained inks are shown in Table 3. Since the inks contained an acrylate having a Log P of 2 or more and 3 or more functional groups and an acrylate having a Log P of less than 2, the misting resistance was "very good".

[Examples 10 to 12]

An ink was obtained in the same manner as in Example 1 except that raw materials were weighed with the ink composition shown in Table 3.

The evaluation results of the obtained inks are shown in Table 3. Since the inks contained an acrylate having an alicyclic skeleton, the low tackiness, the leveling of the ink, and the heat resistance were "very good".

[Example 13]

An ink was obtained in the same manner as in Example 1 except that raw materials were weighed with the ink composition shown in Table 3.

The evaluation results of the obtained inks are shown in Table 3. Since the ink contained tricyclodecane dimethanol diacrylate having two or more functional groups having 5 to 10 rotatable bonds, the low tackiness, the leveling of the ink, the heat resistance, and the curability were "very good".

[Table 3]

| | | Example 8 | Example 9 | Example 10 | Example 11 | Example 12 | Example 13 |
|---|---|---|---|---|---|---|---|
| | Resin 6 | 15 | 15 | 15 | 15 | 15 | 15 |
| | B1 | - | - | 67 | - | - | - |
| | B2 | - | - | - | 67 | - | - |
| | B3 | - | - | - | - | 67 | - |
| | B4 | - | - | - | - | - | 67 |
| | B5 | 34 | 34 | - | - | - | - |
| | B10 | 33 | - | - | - | - | - |
| | B11 | - | 33 | - | - | - | - |
| | Pigment | 18 | 18 | 18 | 18 | 18 | 18 |
| Ink properties | $\tan\delta_i$ | 2.0 | 2.1 | 2.4 | 2.5 | 2.4 | 2.3 |
| | Low tackiness | AA | AA | AA | AA | AA | AA |
| | Leveling of ink | AA | AA | AA | AA | AA | AA |
| | Heat resistance | A | A | AA | AA | AA | AA |
| Quality | Curability | A | A | A | A | A | AA |
| | Misting resistance | AA | AA | A | A | A | A |
| | Anti-scumming property | A | A | A | A | A | A |
| | Fluidity | A | A | A | A | A | A |

[Examples 14 to 16]

An ink was obtained in the same manner as in Example 1 except that raw materials were weighed with the ink composition shown in Table 4.

The evaluation results of the obtained inks are shown in Table 4. Since the inks contained both a hydrophobic acrylate and a hydrophilic acrylate, the low tackiness, the leveling of the ink, the heat resistance, the curability, and the misting resistance were "very good".

[Examples 17 and 18]

An ink was obtained in the same manner as in Example 1 except that raw materials were weighed with the ink composition shown in Table 4.

The evaluation results of the obtained inks are shown in Table 4. Since the inks contained a hydrophobic acrylate and an acrylate having a hydroxy group, the low tackiness, the leveling of the ink, the heat resistance, the curability, the misting resistance, and the anti-scumming property were "very good".

[Comparative Example 2]

An ink was obtained in the same manner as in Example 1 except that raw materials were weighed with the ink composition shown in Table 4.

The evaluation results of the obtained inks are shown in Table 4. Since the Tg of the resin was 50°C, the low tackiness, the leveling of the ink, the curability, the misting resistance, and the scumming were "poor", and the heat resistance was unacceptable.

[Comparative Example 3]

An ink was obtained in the same manner as in Example 1 except that raw materials were weighed with the ink composition shown in Table 4.

The evaluation results of the obtained inks are shown in Table 4. Since the Tg of the resin was higher than 150°C, the leveling of the ink and the fluidity were "poor".

[Comparative Example 4]

An ink was obtained in the same manner as in Example 1 except that raw materials were weighed with the ink composition shown in Table 4.

The evaluation results of the obtained inks are shown in Table 4. Since the content of the styrene-based compound (a) in the resin was less than 50.0 mol%, the low tackiness and the misting resistance were "poor".

[Comparative Example 5]

An ink was obtained in the same manner as in Example 1 except that raw materials were weighed with the ink composition shown in Table 4.

The evaluation results of the obtained inks are shown in Table 4. Since the content of the styrene-based compound (a) in the resin was more than 85.0 mol%, compatibility with the polyfunctional (meth)acrylate was poor, the resin was precipitated, and an ink could not be prepared.

[Table 4-1]

| | | | Example 14 | Example 15 | Example 16 | Example 17 | Example 18 |
|---|---|---|---|---|---|---|---|
| | | Resin 6 | 15 | 15 | 15 | 15 | 15 |
| | | Resin 9 | - | - | - | - | - |
| | | Resin 10 | - | - | - | - | - |
| | | Resin 11 | - | - | - | - | - |
| | | Resin 12 | - | - | - | - | - |
| | | B4 | 34 | 34 | 34 | 34 | 34 |
| | | B5 | 33 | - | - | - | - |
| | | B6 | - | 33 | - | - | - |
| | | B7 | - | - | 33 | - | - |
| | | B8 | - | - | - | 33 | - |
| | | B9 | - | - | - | - | 33 |
| | | Pigment | 18 | 18 | 18 | 18 | 18 |
| Ink properties | | $\tan\delta_i$ | 2.1 | 2.4 | 2.2 | 2.0 | 2.0 |
| Quality | | Low tackiness | AA | AA | AA | AA | AA |
| | | Leveling of ink | AA | AA | AA | AA | AA |
| | | Heat resistance | AA | AA | AA | AA | AA |
| | | Curability | AA | AA | AA | AA | AA |
| | | Misting resistance | AA | AA | AA | AA | AA |
| | | Anti-scumming property | A | A | A | AA | AA |
| | | Fluidity | A | A | A | A | A |

[Table 4-2]

| | | | Comparative Example 2 | Comparative Example 3 | Comparative Example 4 | Comparative Example 5 |
|---|---|---|---|---|---|---|
| | | Resin 6 | - | - | - | - |
| | | Resin 9 | 25 | - | - | - |
| | | Resin 10 | - | 15 | - | - |
| | | Resin 11 | - | - | 15 | - |
| | | Resin 12 | - | - | - | 15 |
| | | B4 | - | - | - | - |
| | | B5 | 57 | 67 | 67 | 67 |
| | | B6 | - | - | - | - |
| | | B7 | - | - | - | - |
| | | B8 | - | - | - | - |
| | | B9 | - | - | - | - |
| | | Pigment | 18 | 18 | 18 | 18 |
| Ink properties | | $\tan\delta_i$ | 10 | 1.0 | 4.0 | - |

(continued)

| | | Comparative Example 2 | Comparative Example 3 | Comparative Example 4 | Comparative Example 5 |
|---|---|---|---|---|---|
| Quality | Low tackiness | C | A | C | - |
| | Leveling of ink | C | C | A | - |
| | Heat resistance | C | A | A | - |
| | Curability | C | A | A | - |
| | Misting resistance | C | A | C | - |
| | Anti-scumming property | C | A | A | - |
| | Fluidity | A | C | A | - |

[Example 19]

Resin 2 and an ethylenically unsaturated compound (B6) were weighed with the composition shown in Table 5, stirred and dissolved at 100°C for 3 hours, and cooled to room temperature, affording an active energy ray-curable composition.
The evaluation results of the obtained composition are shown in Table 5. The curing sensitivity was "good", and the adhesion was "better".

[Examples 20 to 22]

An active energy ray-curable composition was obtained in the same manner as in Example 19 except that raw materials were weighed with the composition shown in Table 5.
The evaluation results of the obtained composition are shown in Table 5. The curing sensitivity was "good", and the adhesion was "better".

[Example 23]

Resin 6 and the ethylenically unsaturated compound (B6) were weighed with the composition shown in Table 5, stirred and dissolved at 100°C for 3 hours, and cooled to room temperature. Thereafter, the polyvalent isocyanate compound (C1) and the polyhydric alcohol compound (D1) were weighed, and stirred at room temperature until the mixture became uniform, affording an active energy ray-curable composition.
The evaluation results of the obtained composition are shown in Table 5. Since the polyvalent isocyanate compound and the polyhydric alcohol compound were contained, the curing sensitivity and the adhesion were "better".

[Example 24]

An active energy ray-curable composition was obtained in the same manner as in Example 23 except that raw materials were weighed with the composition shown in Table 5.
The evaluation results of the obtained composition are shown in Table 5. The curing sensitivity and adhesion were "better".

[Example 25]

Resin 6 and the ethylenically unsaturated compound (B6) were weighed with the composition shown in Table 5, stirred and dissolved at 100°C for 3 hours, and cooled to room temperature. Thereafter, the urethane compound (E1) was weighed, and stirred at room temperature until the mixture became uniform, affording an active energy ray-curable composition.
The evaluation results of the obtained composition are shown in Table 5. Since the urethane compound was contained, and the urethane compound had an acryloyl group, the curing sensitivity was "very good", and the adhesion was "better".

**EP 4 410 849 A1**

[Example 26]

Resin 6 and the ethylenically unsaturated compound (B6) were weighed with the composition shown in Table 5, stirred and dissolved at 100°C for 3 hours, and cooled to room temperature. Thereafter, the polyvalent isocyanate compound (C1), the polyhydric alcohol compound (D1) and the urethane compound (E1) were weighed, and stirred at room temperature until the mixture became uniform, affording an active energy ray-curable composition.
The evaluation results of the obtained composition are shown in Table 5. Since the polyvalent isocyanate compound, the polyhydric alcohol compound and the urethane compound were contained, the curing sensitivity and the adhesion were "very good".

[Example 27]

An active energy ray-curable composition was obtained in the same manner as in Example 26 except that raw materials were weighed with the composition shown in Table 5.
The evaluation results of the obtained composition are shown in Table 5. The curing sensitivity and the adhesion were "very good".
Since the active energy ray-curable compositions of Examples 19 to 27 are superior in curing sensitivity and adhesion, it can be understood that the compositions are also suitable as an overcoat varnish, a paint, an adhesive, or a photoresist.

[Reference Example 1]

Resin 6, the polyhydric alcohol compound (C1) and the polyhydric alcohol compound (D1) were weighed with the composition shown in Table 5, and stirred until they became uniform, affording an active energy ray-curable composition.
The evaluation results of the obtained composition are shown in Table 5. Since no ethylenically unsaturated compound was contained, the curing sensitivity was "poor". It can thus be understood that the composition is unsuitable as an overcoat varnish, a paint, an adhesive or a photoresist.

[Reference Example 2]

The ethylenically unsaturated compound (B6), the polyhydric alcohol compound (C1), and the polyhydric alcohol compound (D1) were weighed with the composition shown in Table 5, and stirred until they became uniform, affording an active energy ray-curable composition.
The evaluation results of the obtained composition are shown in Table 5. Since the resin of the present invention was not contained, the adhesion was "poor". It can thus be understood that the composition is unsuitable as an overcoat varnish, a paint, an adhesive or a photoresist.

[Table 5-1]

| | | Example 19 | Example 20 | Example 21 | Example 22 | Example 23 | Example 24 |
|---|---|---|---|---|---|---|---|
| Composition (mass%) | Resin 2 | 25 | - | - | - | - | - |
| | Resin 3 | - | 25 | - | - | - | - |
| | Resin 6 | - | - | 25 | 25 | 25 | 25 |
| | B6 | 75 | 75 | 75 | - | 25 | 25 |
| | B7 | - | - | - | 75 | - | - |
| | C1 | - | - | - | - | 12 | - |
| | C2 | - | - | - | - | - | 25 |
| | D1 | - | - | - | - | 38 | - |
| | D2 | - | - | - | - | - | 25 |
| | E1 | - | - | - | - | - | - |

(continued)

|  |  | Example 19 | Example 20 | Example 21 | Example 22 | Example 23 | Example 24 |
|---|---|---|---|---|---|---|---|
| Quality | Curing sensitivity | A | A | A | A | A | A |
|  | Adhesion | B | B | B | B | A | A |

[Table 5-2]

|  |  | Example 25 | Example 26 | Example 27 | Reference Example 1 | Reference Example 2 |
|---|---|---|---|---|---|---|
| Composition (mass%) | Resin 2 | - | - | - | - | - |
|  | Resin 3 | - | - | - | - | - |
|  | Resin 6 | 25 | 25 | 25 | 25 | - |
|  | B6 | 25 | 25 | 25 | - | 25 |
|  | B7 | - | - | - | - | - |
|  | C1 | - | 9 | - | 19 | 19 |
|  | C2 | - | - | 18 | - | - |
|  | D1 | - | 27 | - | 56 | 56 |
|  | D2 | - | - | 18 | - | - |
|  | E1 | 50 | 14 | 14 | - | - |
| Quality | Curing sensitivity | AA | AA | AA | C | B |
|  | Adhesion | A | AA | AA | B | C |

**Claims**

1. A resin that is a copolymer of a monomer group including a styrene-based compound (a) and a vinyl monomer (c) having a hydrophilic group, wherein a content of the styrene-based compound (a) in the monomer group is 50.0 mol% or more and 85.0 mol% or less, and the resin has a glass transition temperature Tg of 100°C or more and 150°C or less.

2. The resin according to claim 1, wherein the monomer group further includes a (meth)acrylic acid alkyl ester (b), and a content of the (meth)acrylic acid alkyl ester (b) is 0.5 mol% or more and 10.0 mol% or less.

3. The resin according to claim 1 or 2, wherein an alkyl group of the (meth)acrylic acid alkyl ester (b) has 5 or more and 10 or less carbon atoms.

4. The resin according to any one of claims 1 to 3, wherein the resin has a loss tangent tan $\delta_r$ of 0.5 or more and 10.0 or less as measured with a parallel plate vibration rheometer of JIS K 7244-10: 2005 at 160°C, an angular velocity of 10 rad/s, and a strain of 10%.

5. An active energy ray-curable composition comprising:

   the resin according to any one of claims 1 to 4; and
   an ethylenically unsaturated compound (A).

6. An active energy ray-curable ink comprising the active energy ray-curable composition according to claim 5 and a pigment.

7. The active energy ray-curable ink according to claim 6, wherein the ethylenically unsaturated compound (A) is a polyfunctional (meth)acrylate (B).

8. The active energy ray-curable ink according to claim 6 or 7, wherein the active energy ray-curable ink has a loss tangent tan $\delta_i$ of 1.0 or more and 4.0 or less as measured with a parallel plate vibration rheometer of JIS K 7244-10: 2005 at 25°C, an angular velocity of 400 rad/s, and a strain of 40%.

9. The active energy ray-curable ink according to claim 7 or 8, wherein the number of rotatable bonds of the polyfunctional (meth)acrylate (B) is 5 or more and 10 or less.

10. The active energy ray-curable ink according to any one of claims 7 to 9, wherein the polyfunctional (meth)acrylate (B) has an alicyclic skeleton.

11. The active energy ray-curable ink according to any one of claims 7 to 10, wherein the polyfunctional (meth)acrylate (B) includes both a hydrophobic (meth)acrylate and a hydrophilic (meth)acrylate.

12. The active energy ray-curable composition according to claim 5, further comprising:

    a polyvalent isocyanate compound (C); and
    a polyhydric alcohol compound (D).

13. The active energy ray-curable composition according to claim 5 or 12, further comprising a urethane compound.

14. An overcoat varnish, a paint, an adhesive, or a photoresist comprising the active energy ray-curable composition according to claim 5, 12 or 13.

15. A method for producing a printed matter, the method comprising a step of irradiating the active energy ray-curable composition according to claim 5 with an active energy ray after applying the active energy ray-curable composition to a substrate.

16. The method for producing a printed matter according to claim 15, wherein the active energy ray is an electron beam.

17. The method for producing a printed matter according to claim 15 or 16, further comprising a step of performing treatment in hot water at 90°C or more and 150°C or less.

## INTERNATIONAL SEARCH REPORT

| International application No. |
| --- |
| **PCT/JP2022/035853** |

### A. CLASSIFICATION OF SUBJECT MATTER

***C08F 212/08***(2006.01)i; ***B41M 1/08***(2006.01)i; ***B41M 1/30***(2006.01)i; ***C08F 2/46***(2006.01)i; ***C08F 20/00***(2006.01)i; ***C08F 220/10***(2006.01)i; ***C09D 11/101***(2014.01)i
FI:   C08F212/08; B41M1/08; B41M1/30 D; C08F2/46; C08F20/00 510; C08F220/10; C09D11/101

According to International Patent Classification (IPC) or to both national classification and IPC

### B. FIELDS SEARCHED

Minimum documentation searched (classification system followed by classification symbols)

C08F212/08; B41M1/08; B41M1/30; C08F2/46; C08F20/00; C08F220/10; C09D11/101

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2003-335052 A (LION CORP.) 25 November 2003 (2003-11-25) claim 1, paragraph [0010], table 11 | 1-4 |
| A | | 5-17 |
| X | JP 2014-51552 A (CHUO RIKA KOGYO CORP.) 20 March 2014 (2014-03-20) reference example 1 | 1-2, 4 |
| A | | 3, 5-17 |
| X | WO 2017/163738 A1 (FUJIFILM CORP.) 28 September 2017 (2017-09-28) example 11 | 1 |
| A | | 2-17 |
| A | JP 2021-98773 A (TORAY IND., INC.) 01 July 2021 (2021-07-01) entire text | 1-17 |
| A | WO 2020/235556 A1 (TORAY IND., INC.) 26 November 2020 (2020-11-26) entire text | 1-17 |

☑ Further documents are listed in the continuation of Box C.　　☑ See patent family annex.

| | |
| --- | --- |
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
| --- | --- |
| **31 October 2022** | **15 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/035853**

C. DOCUMENTS CONSIDERED TO BE RELEVANT

| Category* | Citation of document, with indication, where appropriate, of the relevant passages | Relevant to claim No. |
|---|---|---|
| A | WO 2020/235557 A1 (TORAY IND., INC.) 26 November 2020 (2020-11-26)<br>entire text | 1-17 |
| A | JP 2019-143136 A (TORAY IND., INC.) 29 August 2019 (2019-08-29)<br>entire text | 1-17 |
| A | JP 2009-263622 A (ARAKAWA CHEM. IND., CO., LTD.) 12 November 2009 (2009-11-12)<br>entire text | 1-17 |
| A | JP 2011-26522 A (ARAKAWA CHEM. IND., CO., LTD.) 10 February 2011 (2011-02-10)<br>entire text | 1-17 |

Form PCT/ISA/210 (second sheet) (January 2015)

## INTERNATIONAL SEARCH REPORT
### Information on patent family members

International application No.

**PCT/JP2022/035853**

| Patent document cited in search report | | | Publication date (day/month/year) | Patent family member(s) | | | Publication date (day/month/year) |
|---|---|---|---|---|---|---|---|
| JP | 2003-335052 | A | 25 November 2003 | (Family: none) | | | |
| JP | 2014-51552 | A | 20 March 2014 | (Family: none) | | | |
| WO | 2017/163738 | A1 | 28 September 2017 | US 2019/0010349 A1 example 11 EP 3434742 A1 CN 109071986 A | | | |
| JP | 2021-98773 | A | 01 July 2021 | (Family: none) | | | |
| WO | 2020/235556 | A1 | 26 November 2020 | US 2022/0235237 A1 entire text EP 3974200 A1 CN 113825810 A | | | |
| WO | 2020/235557 | A1 | 26 November 2020 | EP 3974201 A1 entire text CN 113825809 A KR 10-2022-0013360 A | | | |
| JP | 2019-143136 | A | 29 August 2019 | (Family: none) | | | |
| JP | 2009-263622 | A | 12 November 2009 | (Family: none) | | | |
| JP | 2011-26522 | A | 10 February 2011 | (Family: none) | | | |

Form PCT/ISA/210 (patent family annex) (January 2015)

**REFERENCES CITED IN THE DESCRIPTION**

**Patent documents cited in the description**

- JP 2018083864 A

- JP 2009263622 A